# EUROPÄISCHE PATENTSCHRIFT

(11) **EP 0 902 811 B1**
(45) Veröffentlichungstag und Bekanntmachung des Hinweises auf die Patenterteilung: **08.08.2001**
(21) Anmeldenummer: 97927075.8
(22) Anmeldetag: 28.05.1997
(51) Int. Cl.: C08L 71/12, C08L 25/00, C08K 7/24, C08K 7/22, C08K 7/00, C08K 3/04

(54) **FLAMMWIDRIGE THERMOPLASTISCHE FORMMASSEN MIT VERBESSERTER TROPFFESTIGKEIT**
NON-FLAMMABLE, THERMOPLASTIC MOULDED MATERIALS WITH IMPROVED ANTI-DRIP PROPERTIES
MATIERES THERMOPLASTIQUES MOULABLES IGNIFUGEES PRESENTANT DES PROPRIETES ANTI-GOUTTE AMELIOREES

(30) Priorität: 30.05.1996 DE 19621732
(43) Veröffentlichungstag der Anmeldung: 24.03.1999
(73) Patentinhaber: BASF AKTIENGESELLSCHAFT, 67056 Ludwigshafen (DE)
(72) Erfinder: WEBER, Martin, D-67487 Maikammer (DE); HORN, Peter, D-69118 Heidelberg (DE); WEISS, Robert, D-67281 Kirchheim (DE); HECKMANN, Walter, D-69469 Weinheim (DE); HINGMANN, Roland, D-68526 Ladenburg (DE)
(74) Vertreter: Kinzebach, Werner, Dr.
(86) Internationale Anmeldenummer: EP9702792
(87) Internationale Veröffentlichungsnummer: WO9745486

(56) Entgegenhaltungen:
- EP-A- 0 192 888
- EP-A- 0 400 402
- EP-A- 0 794 229
- GB-A- 1 459 648
- US-A- 4 483 958
- DATABASE WPI Section Ch, Week 9621 Derwent Publications Ltd., London, GB; Class A18, AN 96-205653 XP002040991 & JP 08 073 649 A (SEKISUI CHEM IND CO LTD) , 19.März 1996

## Beschreibung

Die vorliegende Erfindung betrifft flammwidrige thermoplastische Formmassen mit verbesserter Tropffestigkeit, deren Verwendung zur Herstellung von Fasern, Folien und Formkörpern und die aus ihnen hergestellten Fasern, Folien und Formkörper.

Polymermischungen aus Polyphenylenether (PPE) und Styrolpolymerisaten sind z.B. aus den US-Patentschriften 3,383,435; 4,128,602 sowie 4,128,603 bekannt. Solche Formmassen eignen sich zur Herstellung von Formteilen, die sich im Vergleich zu schlagzähmodifizierten Styrolpolymerisaten (HIPS, High Impact Polystyrol), die nicht mit Polyphenylenethern abgemischt sind, durch eine bessere Wärmeformbeständigkeit auszeichnen. Eine ausführliche Beschreibung der Eigenschaften dieser Polymermischungen findet sich auch in L. Bottenbruch, "Technische Polymer-Blends", Kunststoff Handbuch 3/2, Hanser Verlag, München, 1993.

Ein wesentlicher Vorteil der Polymerblends aus Polyphenylenether und Styrolpolymerisaten ist darin zu sehen, daß durch Zusatz halogenfreier Flammschutzmittel, wobei insbesondere phosphorhaltige Verbindungen zu erwähnen sind, Formmassen hergestellt werden können, die flammwidrig sind und daher für viele Anwendungen im Bereich der Elektrotechnik eingesetzt werden. Für den Einsatz auf dem Gebiet der Elektrotechnik ist insbesondere die Prüfung der Flammwidrigkeit nach UL 94 (in J. Troitzsch, "International Plastics Flammability Handbook", S. 346 ff., Hanser Verlag, München, 1990) ausschlaggebend. Bei dieser Prüfung werden vertikal befestigte Probekörper mehrfach beflammt. Dabei erhitzt sich der Probekörper sehr stark, was in vielen Fällen dazu führt, daß brennendes Polymermaterial abtropft und die unter dem Stab angebrachte Bodenwatte entzündet. Dieses unerwünschte Verhalten wird insbesondere dann beobachtet, wenn zum Erreichen kurzer Brandzeiten große Mengen an Flammschutzmittel eingesetzt werden müssen.

Das Problem des brennenden Abtropfens bei der UL 94-Prüfung ist seit langem bekannt und wird in der Technik meist durch Zusatz kleiner Mengen Teflon als Antitropfmittel gelöst (US-Patentschrift 4,107,232). Man ist jedoch in jüngster Zeit bestrebt, den Einsatz halogenhaltiger Verbindungen in thermoplastischen Formmassen vollständig zu vermeiden. Geeignete alternative Antitropfmittel konnten jedoch bisher nicht gefunden werden.

Aus der EP 0 297 888 ist die Verwendung von expandierbarem Graphit in Kombination mit Ruß bestimmter Spezifikation zur Einstellung der Leitfähigkeit von thermoplastischen oder wärmehärtbaren Harzen bekannt. Die gemäß EP 0 297 888 erhaltenen Harze eignen sich besonders zur Herstellung von elektrisch leitenden Materialien, wie Elektroden, und zur Abschirmung elektromagnetischer Wellen. Das Problem der Verbesserung der Tropffestigkeit wird darin jedoch nicht angesprochen.

Aus der JO 3181 532 war ebenfalls die Verwendung von expandierbarem Graphit für thermoplastische Formmassen bekannt. Darin werden jedoch keine flammwidrigen Formmassen beschrieben. Zweck der Graphitzugabe gemäß JO 3181 532 war eine Verbesserung der elektrischen Leitfähigkeit, sowie der Wärmeleitung und Gleiteigenschaften.

Die EP-A-0 794 229, welche ein Dokument nach Artikel 54(3) EPÜ darstellt, beschreibt Formmassen umfassend Polyphenylenoxid, vinylaromatisches Polymer, Blähgraphit und Flammschutzmittel ausgewählt unter rotem Phosphor, phosphorhaltigen Verbindungen und Gemischen davon.

Die JP-A-08 073 649 beschreibt Formmassen bestehend aus einem thermoplastischen Harz, rotem Phosphor und wärmeexpandierbarem Graphit.

Es stellt sich somit die Aufgabe, flammgeschützte thermoplastische Formmassen, insbesondere Formmassen auf Basis von Polyphenylenether und Styrolpolymeren, bereitzustellen, deren Tropffestigkeit durch Zusatz eines halogenfreien Antitropfmittels verbessert worden ist.

Überraschenderweise wurde gefunden, daß der Zusatz einer die Tropffestigkeit erhöhenden Menge expandierbaren Graphits, insbesondere von etwa 0,5 bis etwa 10 Gew.-% expandierbarem Graphit, das Abtropfen von flammwidrig ausgerüsteten Formmassen verringern kann. Erfindungsgemäß sind insbesondere Formmassen auf Basis von PPE und HIPS erhältlich, deren Tropffestigkeit deutlich erhöht ist. Im Brandtest nach UL 94 können diese erfindungsgemäßen Formmassen die Klassifizierung V 0 erreichen.

Dieser Befund ist umso überraschender, als weder die EP 0 297 888 noch die JO 31 81 532 einen Hinweis darauf liefert, daß allein durch expandierten Graphit das Brandverhalten und insbesondere das Abtropfverhalten thermoplastischer Formmassen, wie z.B. Formmassen aus Polyphenylenether und schlagfestem Polystyrol, verbessert werden kann.

Gegenstand der Erfindung sind somit flammwidrige, thermoplastische Formmassen, enthaltend ein thermoplastisches Harz auf Basis von einem oder mehreren Polyphenylenethern und mindestens einem vinylaromatischen Polymer, ein Flammschutzmittel und eine die Tropffestigkeit der Formmasse erhöhende Menge an expandierbarem Graphit. Vorzugsweise ist der expandierbare Graphit in einem Anteil von etwa 0,5 bis etwa 10 Gew.-%, vorzugsweise etwa 0,5 bis etwa 9 Gew.-%, insbesondere etwa 0,5 bis etwa 7,5 Gew.-%, bezogen auf das Gesamtgewicht der Formmasse enthalten.

Gemäß einer vorteilhaften Ausführungsform der Erfindung wird eine thermoplastische, flammwidrige Formmasse bereitgestellt, welche, jeweils bezogen auf das Gesamtgewicht der Formmasse
A) etwa 5 bis etwa 97,5 Gew.-% Polyphenylenether,
B) etwa 1 bis etwa 93,5 Gew.-% Styrolpolymerisat,
C) etwa 1 bis etwa 20 Gew.-% Flammschutzmittel,
D) etwa 0,5 bis etwa 10 Gew.-% expandierbaren Graphit,
E) etwa 0 bis etwa 50 Gew.-% Schlagzähmodifier sowie
F) etwa 0 bis etwa 60 Gew.-% üblicher Zusätze
enthält.

Vorzugsweise wird eine Formmasse bereitgestellt, welche, jeweils bezogen auf das Gesamtgewicht der Formmasse
A) etwa 15 bis etwa 87,5 Gew.-% Polyphenylenether,
B) etwa 10 bis etwa 82,5 Gew.-% Styrolpolymerisat,
C) etwa 2 bis etwa 19 Gew.-% Flammschutzmittel,
D) etwa 0,5 bis etwa 9 Gew.-% expandierbaren Graphit,
E) etwa 0 bis etwa 25 Gew.-% Schlagzähmodifier sowie
F) etwa 0 bis etwa 50 Gew.-% üblicher Zusätze
enthält.

Besonders bevorzugt ist eine Formmasse, die, bezogen auf das Gesamtgewicht der Formmasse
A) etwa 20 bis etwa 82 Gew.-% Polyphenylenether,
B) etwa 15 bis etwa 77 Gew.-% Styrolpolymerisat,
C) etwa 2,5 bis etwa 18 Gew.-% Flammschutzmittel,
D) etwa 0,5 bis 7,5 Gew.-% expandierten Graphit,
E) etwa 0 bis etwa 20 Gew.-% Schlagzähmodifier sowie
F) etwa 0 bis etwa 30 Gew.-% üblicher Zusätze
enthält.

Als Komponente A) wird erfindungsgemäß wenigstens ein an sich bekannter Polyphenylenether verwendet. Insbesondere sind dies Verbindungen auf Basis von substituierten, insbesondere disubstituierten Polyphenylenethern, wobei der Ethersauerstoff der einen Einheit an den Benzolkern der benachbarten Einheit gebunden ist. Vorzugsweise werden in 2- und/oder 6-Stellung zum Sauerstoffatom substituierte Polyphenylenether verwendet. Als Beispiele für Substituenten sind Halogenatome, wie Chlor oder Brom, und Alkylreste mit 1 bis 4 Kohlenstoffatomen, die vorzugsweise kein α-ständiges tertiäres Wasserstoffatom aufweisen, z.B. Methyl-, Ethyl-, Propyl- oder Butylreste, zu nennen. Die Alkylreste können wiederum durch Halogenatome, wie Chlor oder Brom, oder durch eine Hydroxylgruppe substituiert sein. Weitere Beispiele möglicher Substituenten sind Alkoxyreste, vorzugsweise mit bis zu 4 Kohlenstoffatomen, wie Methoxy, Ethoxy, n-Propoxy und n-Butoxy, oder gegebenenfalls durch Halogenatome und/oder Alkylgruppen substituierte Phenylreste. Ebenfalls geeignet sind Copolymere verschiedener Phenole wie z.B. Copolymere von 2,6-Dimethylphenol und 2,3,6-Trimethylphenol. Selbstverständlich können auch Gemische verschiedener Polyphenylenether eingesetzt werden.

Beispiele für Polyphenylenether sind Poly(2,6-dilauryl-1,4-phenylenether), Poly(2,6-diphenyl-1,4-phenylenether), Poly(2,6-dimethoxy-1,4-phenylenether), Poly(2,6-diethoxy-1,4-phenylenether), Poly(2-methoxy-6-ethoxy-1,4-phenylenether), Poly(2-ethyl-6-stearyloxy-1,4-phenylenether, Poly-(2,6-dichlor-1,4-phenylenether), Poly(2-methyl-6-phenyl-1,4-phenylenether), Poly(2,6-dibenzyl-1,4-phenylenether), Poly(2-ethoxy-1,4-phenylenether), Poly-(2-chlor-1,4-phenylenether), Poly(2,5-dibrom-1,4-phenylenether). Bevorzugt werden Polyphenylenether eingesetzt, bei denen die Substituenten Alkylreste mit 1 bis 4 Kohlenstoffatomen sind, wie Poly(2,6-dimethyl-1,4-phenylenether), Poly(2,6-diethyl-1,4-phenylenether), Poly(2-methyl-6-ethyl-1,4-phenylenether), Poly(2-methyl-6-propyl-1,4-phenylenether), Poly(2,6-dipropyl-1,4-phenylenether) und Poly (2-ethyl-6-propyl-1,4-phenylenether).

Unter Polyphenylenether im Sinne der Erfindung sollen auch solche verstanden werden, die mit Monomeren, wie Fumarsäure, Maleinsäure oder Maleinsäureanhydrid, modifiziert sind.

Derartige Polyphenylenether sind u.a. in der WO 87/00540 beschrieben.

Hinsichtlich der physikalischen Eigenschaften der Polyphenylenether werden solche in den Zusammensetzungen eingesetzt, die ein mittleres Molekulargewicht Mw (Gewichtsmittel) von etwa 8000 bis etwa 70000, vorzugsweise etwa 12000 bis etwa 60000 und insbesondere etwa 25000 bis etwa 50000, aufweisen. Dies entspricht einer Grenzviskosität von etwa 0,18 bis etwa 0,7, vorzugsweise von etwa 0,25 bis etwa 0,62 und insbesondere von etwa 0,39 bis etwa 0,55 dl/g, gemessen in Chloroform bei 25°C.

Die Bestimmung der Molekulargewichtsverteilung erfolgt im allgemeinen mittels Gelpermeationschromatographie (Shodex-Trennsäule 0,8 x 50 cm des Typs A 803, A 804 und A 805 mit THF als Elutionsmittel bei Raumtemperatur). Die Lösung der PPE-Proben in THF erfolgt unter Druck bei 110°C, wobei 0,16 ml einer 0,25 gew.-%igen Lösung injiziert werden. Die Detektion erfolgt im allgemeinen mit einem UV-Detektor. Die Eichung der Säulen wurde mit PPE-Proben durchgeführt, deren absolute Molekulargewichtsverteilungen durch eine GPC-Laser-Lichtstreuungskombination bestimmt wurde.

Die Komponente B) ist vorzugsweise ein schlagzähmodifiziertes vinylaromatisches Polymer, das vorteilhafterweise mit dem eingesetzten Polyphenylenether verträglich ist.

Beispiele für bevorzugte, mit Polyphenylenethern verträgliche vinylaromatische Polymere sind der Monographie von O.Olabisi, Polymer-Polymer Miscibility, 1979, S. 224 bis 230 und 245 zu entnehmen.

Es kommen sowohl Homo- als auch Copolymerisate von vinylaromatischen Monomeren mit 8 bis 12 C-Atomen in Betracht, welche in Gegenwart eines Kautschuks hergestellt werden. Der Kautschukgehalt beträgt etwa 5 bis etwa 25 Gew.-%, vorzugsweise etwa 8 bis etwa 17 Gew.-%, bezogen auf das Gewicht der Komponente B.

Geeignete schlagfestmodifizierte Polystyrole sind größtenteils im Handel erhältlich und weisen eine Viskositätszahl (VZ) der Hartmatrix von etwa 50 bis etwa 130 ml/g (0,5 %ig in Toluol bei 23°C) auf, vorzugsweise von etwa 60 bis etwa 90 ml/g.

Als monovinylaromatische Verbindungen kommen dabei insbesondere Styrol und die kern- oder seitenkettensubstituierten Styrole in Betracht. Bevorzugte Substituenten sind dabei Halogenatome, wie insbesondere Chlor und Brom; Hydroxyl; und C₁₋₄ Alkyl, wie Methyl, Ethyl, n-Propyl, i-Propyl, n-Butyl und tert.-Butyl. Als Beispiele für diese Verbindungen seien Chlorstyrol, α-Methylstyrol, Styrol, p-Methylstyrol, Vinyltoluol und p-tert.-Butylstyrol genannt. Vorzugsweise wird jedoch Styrol allein verwendet.

Die Homopolymerisate werden im allgemeinen nach den bekannten Verfahren in Masse, Lösung oder Suspension hergestellt (vgl. Ullmanns Enzyklopädie der techn. Chemie, Band 19, Seiten 265 bis 272, Verlag Chemie, Weinheim 1980). Die Homopolymerisate können Gewichtsmittel des Molekulargewichts Mw von etwa 3000 bis etwa 300000 aufweisen, die nach üblichen Methoden bestimmt werden können.

Als Comonomere zur Herstellung von Copolymerisaten kommen z.B. (Meth)acrylsäure, (Meth)acrylsäurealkylester mit 1 bis 4 C-Atomen im Alkylrest, Acrylnitril und Maleinsäureanhydrid sowie Maleinsäureimide, Acrylamid und Methacrylamide sowie deren N,N oder N-alkylsubstituierten Derivate mit 1 bis 10 C-Atomen im Alkylrest in Frage. Beispiele für C₁₋₁₀ Alkylreste umfassen C₁₋₄ Alkylreste obiger Definition sowie n-Pentyl, n-Hexyl, n-Heptyl, n-Octyl, n-Nonyl, n-Decyl und deren verzweigte Analoga.

Die Comonomeren sind je nach ihrer chemischen Struktur in unterschiedlichen Mengen in den Styrolpolymerisaten enthalten. Entscheidend für den Gehalt an Comonomeren im Mischpolymerisat ist die Mischbarkeit des Copolymerisates mit dem Polyphenylenether. Solche Mischungsgrenzen sind bekannt und beispielsweise in der US 4,360,618, 4,405,753 und in der Veröffentlichung von J.R.Fried, G.A.Hanna, Polymer Eng.Sci., Band 22 (1982) Seite 705 ff., beschrieben. Die Herstellung der Copolymeren erfolgt nach bekannten Verfahren, die beispielsweise in Ullmanns Enzyklopädie der techn. Chemie, Band 19, Seite 273 ff, Verlag Chemie, Weinheim (1980), beschrieben sind. Die Copolymerisate haben im allgemeinen Gewichtsmittel des Molekulargewichts (Mw) von etwa 10000 bis etwa 300000, die nach üblichen Methoden bestimmt werden können.

Bei der Komponente B) handelt es sich insbesondere bevorzugt um schlagfest modifiziertes Polystyrol.

Die meist angewandten Verfahren zur Herstellung schlagzähmodifizierter Styrolpolymerisate sind die Polymerisation in Masse oder Lösung in Gegenwart eines Kautschuks, wie es beispielsweise in der US 2,694,692 beschrieben ist, und Verfahren zur Massesuspensionspolymerisation, wie sie beispielsweise in der US 2,862,906 beschrieben sind. Selbstverständlich sind auch andere Verfahren anwendbar, sofern die gewünschte Teilchengröße der Kautschukphase eingestellt wird.

Als Kautschuk werden die üblicherweise für die Schlagzähmodifizierung von Styrolpolymerisaten gebräuchlichen natürlichen oder synthetischen Kautschuke eingesetzt. Geeignete Kautschuke im Sinne der Erfindung sind neben Naturkautschuk z.B. Polybutadien, Polyisopren und Mischpolymerisate des Butadiens und/oder Isoprens mit Styrol und anderen Comonomeren, die eine Glastemperatur, bestimmt nach K.H.Illers und H.Breuer, Kolloidzeitschrift 190 (1), 16 bis 34 (1963), unter -20°C besitzen. Außerdem können erfindungsgemäß Gemische verschiedener schlagzähmodifizierter Polymere gemäß obiger Definition eingesetzt werden.

Als Komponente C) können die erfindungsgemäßen Formmassen die folgenden Verbindungen C1, C2 und C3 einzeln oder im Gemisch enthalten:

### C1) Phosphinoxid der allgemeinen Formel (I)

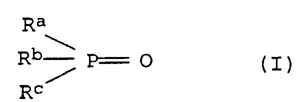

wobei R^{a}, R^{b} und R^{c} gleich oder verschieden sind und ausgewählt sind unter einem Wasserstoffatom, geradkettigen oder verzweigten, gegebenenfalls substituierten Alkyl-, Aryl-, Alkylaryl- oder Cycloalkylgruppen mit bis zu 40 Kohlenstoffatomen.

Bevorzugte Alkylreste sind hierbei C₁-C₂₀-Alkyl, insbesondere C₁-C₁₂-Alkyl, wie z.B. Methyl, Ethyl, n-Propyl, n-Butyl, Neopentyl, n-Hexyl, n-Octyl, n-Nonyl, n-Dodecyl, 2-Ethylhexyl, 3,5,5-Trimethylhexyl und substituierte Alkylreste, wie z.B. Cyanoethyl.

Bevorzugte Arylreste sind Phenyl und Naphthyl sowie einfach oder mehrfach substituierte Reste, wie Tolyl, Xylyl, Mesityl und Cresyl.

Bevorzugte Alkylarylreste sind C₁-C₂₀-Alkylaryl- und insbesondere C₁-C₁₂-Alkylarylreste, wobei Alkylteil und Arylteil wie oben definiert sind.

Bevorzugte Cycloalkylgruppen umfassen C₃-C₁₀-Cycloalkylgruppen, wie Cyclobutyl, Cyclopentyl, Cyclohexyl und Cycloheptyl.

Geeignete Substituenten sind Cyano, Hydroxy, C₁₋₄-Alkyl und Halogen, wie F, Cl, Br, J.

### C2) Phosphat der allgemeinen Formel (II)

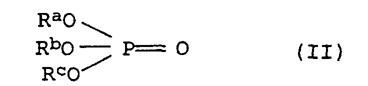

in der die Substituenten R^{a}, R^{b} und R^{c} gleich oder verschieden sind und die oben angegebenen Bedeutungen besitzen, sowie

### C3) eine Borverbindung.

Beispiele für Phosphinoxide C1) sind Triphenylphosphinoxid, Tritolylphosphinoxid, Trisnonylphenylphosphinoxid, Tricyclohexylphosphinoxid, Tris-(n-butyl)-phosphinoxid, Tris-(n-hexyl)-phosphinoxid, Tris-(n-octyl)-phosphinoxid, Tris-(cyanoethyl)-phosphinoxid, Benzylbis-(cyclohexyl)-phosphinoxid, Benzylbisphenylphosphinoxid, Phenylbis-(n-hexyl)-phosphinoxid. Besonders bevorzugt eingesetzt werden Triphenylphosphinoxid, Tricyclohexylphosphinoxid, Tris-(n-octyl)-phosinoxid und Tris-(cyanoethyl)-phosphinoxid.

Als Phosphate C2) kommen vor allem alkyl- und arylsubstituierte Phosphate in Betracht. Beispiele sind Phenylbisdodecylphosphat, Phenylbisneopentylphosphat, Phenylethylhydrogenphosphat, Phenyl-bis-(3,5,5-trimethylhexylphosphat), Ethyldiphenylphosphat, Bis-(2-ethylhexyl)-p-tolyl-phosphat, Tritolylphosphat, Trixylylphosphat, Tirmesitylphosphat, Bis-(2-ethylhexyl)-phenylphosphat, Tris-(nonylphenyl)-phosphat, Bis-(dodecyl)-p-(tolyl)-phosphat, Tricresylphosphat, Triphenylphosphat, Di-butylphenylphosphat, p-Tolyl-bis-(2,5,5-trimethylhexyl)-phosphat, 2-Ethylhexyldiphenylphosphat. Besonders geeignet sind Phosphorverbindungen, bei denen jeder der Reste R^{a}, R^{b} und R^{c} ein Aryl-Rest ist. Ganz besonders geeignet ist dabei Triphenylphosphat, Trixylylphosphat sowie Trimesitylphosphat. Des weiteren können auch cyclische Phosphate eingesetzt werden. Besonders geeignet ist hierbei Diphenylpentaerythritol-diphosphat.

Besonders bevorzugte Mischungen aus folgenden Phosphinoxid C1)-und Phosphat C2)-Kombinationen sind: Triphenylphosphinoxid-Triphenylphosphat oder Trixylylphosphat, Tricyclohexylphosphinoxid und Triphenylphosphat, Tris(cyanoethyl)phosphinoxid und Triphenylphosphat, Tris-(n-octyl)-phosphinoxid und Triphenylphosphat. Es können auch Mischungen aus mehreren Phosphinoxiden und Phosphaten eingesetzt werden, wie etwa die Mischung Triphenylphosphinoxid, Triphenylphosphat, Trixylylphosphat.

Das Molekulargewicht beträgt im allgemeinen nicht mehr als etwa 1000, bevorzugt etwa 150 bis etwa 800.

Unter Borverbindungen C3) sollen erfindungsgemäß sowohl anorganische als auch organische Borverbindungen verstanden werden.

Beispiele für anorganische Borverbindungen sind Borsäure, B₂O₃ und Salze der Borsäure, bevorzugt mit Alkali- oder Erdalkalimetallen. Besonders bevorzugt sind Borsäure, Natriumborat und Boroxid.

Organische Borverbindungen C3) sind beispielsweise Tetraphenylborate, wie z.B. Natriumtetraphenylborat und Tribenzylborat.

Die Zusammensetzung der Komponente C) beträgt im Falle eines Gemischs aus C1, C2 und C3 im allgemeinen (bezogen auf den Gehalt der gesamten Komponente C).
C1) 1 bis 98,9, vorzugsweise 10 bis 85 und insbesondere 20 bis 70 Gew.-%
C2) 1 bis 98.9, vorzugsweise 10 bis 85 und insbesondere 20 bis 70 Gew.-%
C3) 0,1 bis 70, vorzugsweise 5 bis 50 und insbesondere 10 bis 30 Gew.-%.

Weiterhin geeignet als Komponente C) sind phosphororganische Verbindungen der allgemeinen Formeln (IV), (V) und (VI) 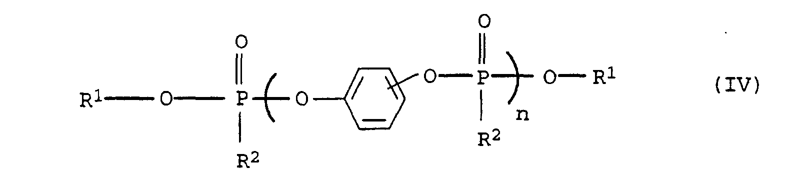 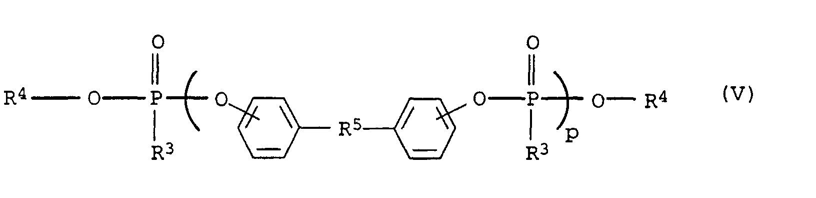 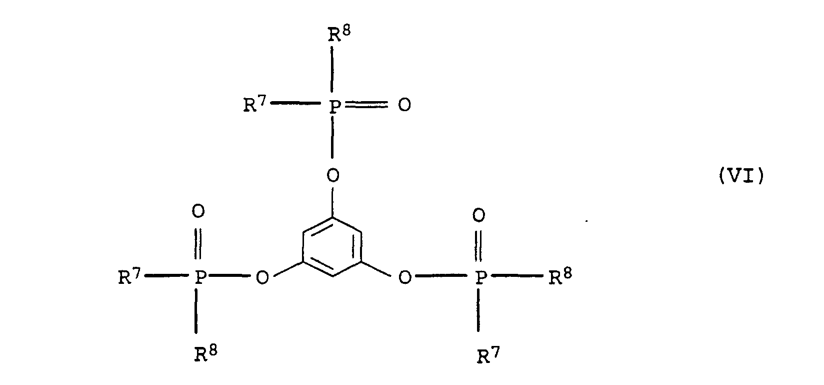 worin
R¹ und R⁴ unabhängig voneinander für gegebenenfalls substituiertes Alkyl oder Aryl stehen;
R², R³, R⁷ und R⁸ unabhängig voneinander für gegebenenfalls substituiertes Alkyl, Aryl, Alkoxy oder Aryloxy stehen,
R⁵ für Alkylen, -SO₂-, -CO-, -N=N- oder -(R⁶)P(O)- steht, worin R⁶ für gegebenenfalls substituiertes Alkyl, Aryl oder Alkylaryl steht, und
n und p unabhängig voneinander einen Wert von 1 bis 30 einnehmen.

Geeignete Substituenten in Verbindungen der Formeln (IV), (V) und (VI) sind Cyano, Hydroxy, C₁-C₄-Alkyl und Halogen, wie F, Cl, Br, J.

Bevorzugte Alkylreste in Verbindung der Formel (IV), (V) und (VI) sind C₁-C₂₀-Alkyl, insbesondere C₁-C₁₂-Alkyl, wie z.B. Methyl, Ethyl, n-Propyl, n-Butyl, Neopentyl, n-Hexyl, n-Octyl, n-Nonyl, n-Dodecyl, 2-Ethylhexyl, 3,5,5-Trimethylhexyl und Cyanoethyl.

Bevorzugte Arylreste in Verbindung der Formeln (IV), (V) und (VI) sind Phenyl und Naphthyl sowie einfach oder mehrfach substituierte Reste, wie Tolyl, Xylyl, Mesityl und Cresyl.

Bevorzugte Alkylarylreste in Verbindung der Formeln (IV), (V) und (VI) sind C₁-C₂₀-Alkylaryl- und insbesondere C₁-C₁₂-Alkylarylreste, wobei Alkylteil und Arylteil wie oben definiert sind.

Bevorzugte Cycloalkylgruppen in Verbindung der Formeln (IV), (V) und (VI) umfassen C₃-C₁₀-Cycloalkylgruppen, wie Cyclobutyl, Cyclopentyl, Cyclohexyl und Cycloheptyl.

Bevorzugte Alkoxyreste in Verbindung der Formeln (IV), (V) und (VI) sind C₁-C₂₀-Alkoxyreste, wobei der C₁-C₂₀-Alkylteil wie oben definiert ist.

Bevorzugte Aryloxyreste in Verbindung der Formeln (IV), (V) und (VI) sind solche, worin der Arylanteil wie oben definiert ist.

Bevorzugte Alkylenreste in Verbindung der Formeln (IV), (V) und (VI) sind C₁-C₆-Alkylenreste, wie Methylen, Ethylen, Propylen und Hexylen.

Die Herstellung von Phosphorsäureestern ist allgemein beschrieben in Houben-Weyl, Methoden der organischen Chemie, Bd. XII/2, Thieme Verlag, 1972. Bevorzugt werden die erfindungsgemäß verwendeten Verbindungen durch Umesterung unter Basenkatalyse bzw. durch Umsetzung von Phosphoroxichlorid mit Phenolen unter Katalyse von Magnesium- bzw. Aluminiumchlorid erhalten. Bevorzugte Verbindungen der Formel (IV) sind die handelsüblichen Produkte auf Basis von Hydrochinon- oder Resorcindiphenylphosphat. Bevorzugte Verbindungen der Formel (V) erhält man durch Reaktion eines Bisphenols (vgl. z. B. Ullmann's Encyclopedia of Industrial Chemistry, 5. Auflage, Bd. A19, S. 349), wie z. B. Bisphenol A oder

Dabei ist zu beachten, daß die technisch verfügbaren Produkte jeweils Mischungen verschiedener Oligomere bzw. Isomere darstellen.

Des weiteren können Mischungen der höheren Phosphate und Monophosphate bzw. Monophosphinoxide in jedem Mischungsverhältnis eingesetzt werden.

Als Komponente D) enthalten die Formmassen expandierbaren Graphit.

Wie dem Fachmann bekannt ist, kann Graphit aufgrund seiner Schichtstruktur Einlagerungsverbindungen ausbilden (siehe auch:
Römpp, Chemie-Lexikon, 9. Aufl., Bd. 2, S. 1642 ff, Thieme-Verlag, Stuttgart, 1990).

Die intercalierte Komponente wird dabei regelmäßig zwischen die Schichten des Graphits eingelagert. Beim Einlagern der Komponente findet auch eine Ausdehnung des Graphit in Richtung der c-Achse statt. Diese Einlagerung ist im allgemeinen reversibel, d.h. bei höheren Temperaturen ist eine Freisetzung der intercalierten Komponente möglich. Besonders geeignete Einlagerungsverbindungen enthalten mindestens etwa 10 Gew.-% inerte Verbindungen, die bei einer Temperatur von mindestens etwa 240°C, vorzugsweise mehr als etwa 250°C, freigesetzt werden. Geeignete inerte Verbindungen sind beispielsweise Wasser, Kohlendioxid, Schwefeltrioxid und Stickstoff.

Die Herstellung solcher Einlagerungsverbindungen ist dem Fachmann bekannt. Zur Herstellung von Einlagerungsverbindungen wird Graphit-Pulver mit der gasförmigen oder flüssigen Komponente unter Druck behandelt (siehe Ullmann's Encyclopedia of Industrial Chemistry, A5, 1986, S. 99 ff. und S. 122 ff.). Beim Erwärmen wird die eingelagerte Verbindung freigesetzt, wobei eine Volumenerhöhung um das 200-fache erfolgen kann (siehe Produktschrift "Expandable Graphite" der Firma Chuo Kasei Co., Ltd.).

Als Komponente E) werden vorzugsweise schlagzähmodifizierende Kautschuke eingesetzt.

Als Komponente E können zusätzlich zu einer kautschukhaltigen Komponente B natürliche oder synthetische Kautschuke eingesetzt werden. Neben Naturkautschuk sind als Schlagzähmodifier z.B. Polybutadien, Polyisopren oder Mischpolymerisate des Butadiens und/oder Isoprens mit Styrol und anderen Comonomeren, die eine Glasübergangstemperatur, bestimmt nach K.H.Illers und H.Breuer, Kolloidzeitschrift 190 (1), 16-34 (1963), von etwa -100°C bis +25°C, vorzugsweise unter 0°C aufweisen. Außerdem können auch entsprechend hydrierte Produkte eingesetzt werden.

Bevorzugte Schlagzähmodifier E sind Blockpolymere aus Vinylaromaten und Dienen. Schlagzähmodifier dieses Typs sind bekannt. In der DE-AS 1 932 234, der DE-AS 2 000 118 sowie der DE-OS 2 255 930 sind unterschiedlich aufgebaute vinylaromatische und Dienblöcke umfassende elastomere Blockcopolymerisate beschrieben. Die Verwendung entsprechender hydrierter Blockcopolymerisate gegebenenfalls im Gemisch mit der nicht hydrierten Vorstufe als Schlagzähmodifier ist beispielsweise beschrieben in der DE-OS 2 750 515, DE-OS 2 434 848, DE-OS 3 038 551, EP-A-0 080 666 und WO 83/01254. Auf die Offenbarung obiger Druckschriften wird hiermit ausdrücklich Bezug genommen.

Insbesondere sind erfindungsgemäß brauchbar Vinylaromat-Dien-Blockcopolymerisate aus Blöcken, die eine Hartphase (Blocktyp S) und als Weichphase einen Block B/S aus Dien- und Vinylaromaten-Einheiten enthalten, der statistischen Aufbau besitzt. Der Aufbau kann dabei entlang der Kette im statistischen Mittel homogen oder inhomogen sein.

Man erhält ein solches erfindungsgemäß geeignetes kautschukelastisches Blockcopolymerisat dadurch, daß die Weichphase aus einen statistischen Copolymerisat eines Vinylaromaten mit einem Dien gebildet wird; statistische Copolymerisate von Vinylaromaten und Dienen erhält man durch Polymerisation in Gegenwart eines polaren Cosolvens.

Ein erfindungsgemäß verwendbares Blockcopolymerisat kann z.B. durch eine der folgenden allgemeinen Formeln (1) bis (11) dargestellt werden:
(1) (S-B/S)ₙ;
(2) (S-B/S)ₙ-S;
(3) B/S-(S-B/S)ₙ;
(4) X-[(S-B/S)ₙ]ₘ+1
(5) X-[(B/S-S)ₙ]ₘ+1;
(6) X-[(S-B/S)ₙ-S]ₘ+1;
(7) X-[(B/S-S)ₙ-B/S]ₘ+1;
(8) Y-[(S-B/S)ₙ]ₘ+1;
(9) Y-[(B/S-S)ₙ]ₘ+1;
(10) Y-[(S-B/S)ₙ-S]ₘ+1;
(11) Y-[(B/S-S)ₙ-B/S]ₘ+1;
wobei
- S: für einen vinylaromatischen Block,
- B/S: für die Weichphase aus einem statistisch aus Dien- und vinylaromatischen Einheiten aufgebauten Block steht,
- X: den Rest eines n-funktionellen Initiators,
- Y: den Rest eines m-funktionellen Kopplungsmittels und
- m,n: natürliche Zahlen von 1 bis 10 bedeuten.

Bevorzugt ist ein Blockcopolymerisat einer der allgemeinen Formeln S-B/S-S, X-[-B/S-S]₂ und Y-[-B/S-S]₂ (Bedeutung der Abkürzungen wie vorstehend) und besonders bevorzugt ein Blockcopolymerisat, dessen Weichphase unterteilt ist in Blöcke
(12) (B/S)₁-(B/S)₂;
(13) (B/S)₁-(B/S)₂-(B/S)₁;
(14) (B/S)₁-(B/S)₂-(B/S)₃;
wobei die Indices 1, 2, 3 für unterschiedliche Strukturen in dem Sinne stehen, daß das Vinylaromat/Dien-Verhältnis in den einzelnen Blöcken B/S unterschiedlich ist oder sich innerhalb eines Blocks in den Grenzen (B/S)₁(B/S)₂ kontinuierlich ändert, wobei die Glasübergangstemperatur T_{g} jedes Teilblocks unter 25°C liegt.

Ein Blockcopolymerisat, das mehrere Blöcke B/S und/oder S mit unterschiedlicher Molmasse je Molekül aufweist, ist ebenfalls bevorzugt.

Ebenso kann an die Stelle eines ausschließlich aus vinylaromatischen Einheiten aufgebauten Blocks S ein Block B treten, da es insgesamt lediglich darauf ankommt, daß ein kautschukelastisches Blockcopolymerisat gebildet wird. Solche Copolymerisate können z.B. eine der Strukturen (15) bis (18) haben
(15) B-(B/S)
(16) (B/S)-B-(B/S)
(17) (B/S)₁-B-(B/S)₂
(18) B-(B/S)₁-(B/S)₂.

Bevorzugte Vinylaromaten sind Styrol, o-Methylstyrol, Vinyltoluol oder Mischungen dieser Verbindungen. Bevorzugte Diene sind Butadien, Isopren, Piperylen, 1-Phenylbutadien oder Mischungen dieser Verbindungen. Eine besonders bevorzugte Monomerkombination ist Butadien und Styrol.

Besonders bevorzugt sind die Weichblöcke aus etwa 25 bis 75 Gew.-% Styrol und etwa 25 bis 75 Gew.-% Butadien aufgebaut. Insbesondere bevorzugt sind Weichblöcke, die einen Butadienanteil von etwa 34 bis 69 Gew.-% und einen Styrolanteil etwa von 31 bis 66 Gew.-% enthalten.

Der Gewichtsanteil des Diens im gesamten Blockcopolymer liegt im Falle der Monomerkombination Styrol/Butadien bei 15 bis 65 Gew.-%, derjenige der vinylaromatischen Komponente entsprechend bei 85 bis 35 Gew.-%. Besonders bevorzugt sind Butadien-Styrol-Blockcopolymere mit einer Monomerzusammensetzung aus 25 bis 60 Gew.-% Dien und 75 bis 40 Gew.-% an vinylaromatischer Verbindung.

Die Blockcopolymere sind durch anionische Polymerisation in einem unpolaren Lösungsmittel unter Zusatz eines polaren Cosolvens erhältlich. Es besteht dabei die Vorstellung, daß das Cosolvens gegenüber dem Metallkation als Lewis-Base wirkt. Als Lösungsmittel werden bevorzugt aliphatische Kohlenwasserstoffe, wie Cyclohexan oder Methylcyclohexan, verwendet. Als Lewis-Basen werden polare aprotische Verbindungen, wie Ether und tertiäre Amine, bevorzugt. Beispiele für besonders effektive Ether sind Tetrahydrofuran und aliphatische Polyether wie Diethylenglycoldimethyl-ether. Als tertiäre Amine sind Tributylamin und Pyridin zu nennen. Das polare Cosolvens wird dem unpolaren Lösungsmittel in einer geringen Menge, z.B. von 0,5 bis 5 Vol.-%, zugesetzt. Besonders bevorzugt ist Tetrahydrofuran in einer Menge von 0,1 bis 0,3 Vol.-%. Erfahrungsgemäß kommt man mit einer Menge von etwa 0,2 Vol.-% in den meisten Fällen aus.

Durch die Dosierung und Struktur der Lewis-Base werden die Copolymerisationsparameter und der Anteil an 1,2- bzw. 1,4-Verknüpfungen der Dieneinheiten bestimmt. Die erfindungsgemäßen Polymere haben z.B. einen Anteil von 15 bis 40% an 1,2-Verknüpfungen und 85 bis 60% an 1,4-Verknüpfungen bezogen auf alle Dieneinheiten.

Die anionische Polymerisation wird mittels metallorganischer Verbindungen initiiert. Bevorzugt sind Verbindungen der Alkalimetalle, besonders des Lithiums. Beispiele für Initiatoren sind Methyllithium, Ethyllithium, Propyllithium, n-Butyllithium, sek.-Butyllithium und tert.-Butyllithium. Die metallorganische Verbindung wird als Lösung in einem chemisch indifferenten (inerten) Kohlenwasserstoff zugesetzt. Die Dosierung richtet sich nach dem angestrebten Molekulargewicht des Polymers, liegt aber in der Regel im Bereich von 0,002 bis 5 Mol%, wenn man sie auf die Monomeren bezieht.

Die Polymerisationstemperatur kann etwa 0 bis 130°C betragen. Bevorzugt wird der Temperaturbereich von 30 bis 100°C.

Für die mechanischen Eigenschaften ist der Volumenanteil der Weichphase im Festkörper von entscheidender Bedeutung. Erfindungsgemäß liegt der Volumenanteil der aus Dien- und vinylaromatischen Sequenzen aufgebauten Weichphase bei 60 bis 95, bevorzugt bei 70 bis 90 und besonders bevorzugt bei 80 bis 90 Vol.-%. Die aus den vinylaromatischen Monomeren entstandenen Blöcke A bilden die Hartphase, deren Volumenanteil entsprechend 1 bis 40, bevorzugt 10 bis 30 und besonder bevorzugt 10 bis 20 Vol.-% ausmacht.

Es ist darauf hinzuweisen, daß zwischen den oben erwähnten Mengenverhältnissen von vinylaromatischer Verbindung und Dien, den vorstehend angegebenen Grenzwerten der Phasenvolumina und der Zusammensetzung, die sich aus den erfindungsgemäßen Bereichen der Glastemperatur ergibt, keine strenge Übereinstimmung besteht, da es sich um jeweils auf volle Zehnerstellen gerundete Zahlenwerte handelt. Dies könnte vielmehr nur zufällig der Fall sein.

Meßbar ist der Volumenanteil der beiden Phasen mittels kontrastierter Elektronenmikroskopie oder Festkörper-NMR-Spektroskopie. Der Anteil der vinylaromatischen Blöcke läßt sich nach Osmiumabbau des Polydienanteils durch Fällen und Auswiegen bestimmen. Das künftige Phasenverhältnis eines Polymers läßt sich auch aus den eingesetzten Monomermengen berechnen, wenn man jedesmal vollständig auspolymerisieren läßt.

Im Sinne der Erfindung eindeutig definiert wird das Blockcopolymere durch den Quotienten aus dem Volumenanteil in Prozent der aus den B/S-Blöcken gebildeten Weichphase und dem Anteil an Dieneinheiten in der Weichphase, der für die Kombination Styrol/ Butadien zwischen 25 und 70 Gew.-% liegt.

Durch den statischen Einbau der vinylaromatischen Verbindungen in den Weichblock des Blockcopolymeren und die Verwendung von Lewis-Basen während der Polymerisation wird die Glasübergangstemperatur (Tg) beeinflußt. Die Glasübergangstemperatur des gesamten Copolymers beträgt vorzugsweise -50°C bis +25°C, bevorzugt weniger als 0°C.

Das Molekulargewicht des Blocks S beträgt vorzugsweise 1000 bis 200.000, insbesondere 3.000 und 80.000 [g/mol]. Innerhalb eines Moleküls können S-Blöcke unterschiedliche Molmasse haben.

Das Molekulargewicht des Blocks B/S beträgt üblicherweise von 2.000 bis 250.000 [g/mol]; bevorzugt sind Werte von 5.000 bis 150.000 [g/mol].

Auch Block B/S kann wie Block S innerhalb eines Moleküls unterschiedliche Molekulargewichtswerte einnehmen.

Das Kupplungszentrum X wird durch die Umsetzung der lebenden anionischen Kettenenden mit einem mindestens bifunktionellen Kupplungsagens gebildet. Beispiele für derartige Verbindungen sind in den US-PSen 3 985 830, 3 280 084, 3 637 554 und 4 091 053 zu finden. Bevorzugt werden z.B. epoxidierte Glyceride wie epoxidiertes Leinsamenöl oder Sojaöl eingesetzt; geeignet ist auch Divinylbenzol. Speziell für die Dimerisierung sind Dichlordialkylsilane, Dialdehyde, wie Terephthalaldehyd, und Ester, wie Ethylformiat oder -benzoat, geeignet.

Bevorzugte Polymerstrukturen sind S-B/S-S, X-[-B/S-S]₂ und Y-[-B/S-S]₂, wobei der statistische Block B/S selbst wieder in Blöcke B1/S1-B2/S2-B3/S3-... unterteilt sein kann. Bevorzugt besteht der statistische Block aus 2 bis 15 statistischen Teilblöcken, besonders bevorzugt aus 3 bis 10 Teilblöcken. Die Aufteilung des statistischen Blocks B/S in möglichst viele Teilblöcke Bn/Sn bietet den entscheidenden Vorteil, daß auch bei einem Zusammensetzungsgradienten innerhalb eines Teilblocks Bn/Sn, wie er sich in der anionischen Polymerisation unter praktischen Bedingungen nur schwer vermeiden läßt, sich der B/S-Block insgesamt wie ein nahezu perfektes statistisches Polymer verhält. Es bietet sich deshalb an, weniger als die theoretische Menge an Lewis-Base zuzusetzen, was den Anteil 1,4-Dienverknüpfungen erhöht, die Glastemperatur Tg absenkt und die Vernetzungsanfälligkeit des Polymeren mindert. Ein größerer oder ein kleinerer Anteil der Teilblöcke kann mit einem hohen Dienanteil ausgestattet werden. Dies bewirkt, daß das Polymer auch unterhalb der Glastemperatur der überwiegenden B/S-Blöcke eine Restzähigkeit behält und nicht vollständig versprödet.

Alle oben angegebenen Gewichts- und Volumenangaben beziehen sich auf die Monomerkombination Butadien/Styrol. Diese Angaben können jedoch ohne weiteres auf andere zu Styrol und Butadien technisch äquivalente Monomere umgerechnet werden.

Die Blockcopolymeren können dadurch aufgearbeitet werden, daß die Carbanionen mit einem Alkohol, wie Isopropanol, protoniert werden, die Reaktionsmischung angesäuert wird, z.B. mit einem Gemisch aus CO₂ und Wasser und das Lösungsmittel entfernt wird. Die Blockcopolymeren können Oxidationsinhibitoren und Antiblockmittel enthalten.

Auch Gemische obiger Kautschuke sind in den erfindungsgemäßen Formmassen einsetzbar.

Als Komponente F) können die erfindungsgemäßen Formmassen gegebenenfalls übliche Zusatzstoffe und Verarbeitungshilfsmittel enthalten.

Als Zusatzstoffe seien genannt Hitze- und Lichtstabilisatoren, Gleit- und Entformungsmittel, Färbemittel, wie Farbstoffe und Pigmente in üblichen Mengen. Weitere Zusatzstoffe sind Verstärkungsmittel, wie Glasfasern, Asbestfasern, Kohlenstoff-Fasern, aromatische Polyamidfasern und/oder Füllstoffe, Gipsfasern, synthetische Calciumsilikate, Kaolin, calciniertes Kaolin, Wollastonit, Talkum und Kreide.

Auch niedermolekulare oder hochmolekulare Polymere kommen als Zusatzstoffe in Betracht, wobei Polyethylenwachs als Gleitmittel besonders bevorzugt ist.

Als Pigmente kommen z.B. in Frage TiO₂ und Ruße.

Bei Verwendung von TiO₂ liegt die mittlere Teilchengröße im Bereich von etwa 50 bis 400 nm, insbesondere etwa 150 bis 240 nm. Technische Verwendung finden Rutile und Anatas, die gegebenenfalls mit Metalloxiden, z.B. Al-oxid, Si-Oxiden, Zn-Oxiden oder Siloxanen beschichtet sind.

Ruße umfassen mikrokristallinen, feinteiligen Kohlenstoff (vgl. Kunststofflexikon, 7. Auflage 1980). Geeignet sind Ofenruße, Acetylenruße, Gasruße sowie die durch thermische Herstellung erhältlichen Thermalruße. Die Teilchengrößen liegen vorzugsweise im Bereich von etwa 0,01 bis 0,1 µm und die Oberflächen im Bereich von etwa 10² bis 10⁴ m²/g (BET/ASTM D 3037) bei DBP-Absorption von etwa 10² bis 10³ ml/100 g (BET/ASTM d 2414).

Über Art und Menge dieser Zusatzstoffe lassen sich die gewünschten Eigenschaften der Endprodukte in weitem Maße steuern.

Die Herstellung der erfindungsgemäßen Formmassen erfolgt zweckmäßigerweise durch Mischen der Komponenten bei Temperaturen im Bereich von 230 bis 320°C in üblichen Mischvorrichtungen, wie z.B. Knetern, Banburrymischern und Einschneckenextrudern, vorzugsweise mit einem Zweischneckenextruder, wobei jedoch zu beachten ist, daß die Verarbeitung unterhalb der Temperatur erfolgen muß, bei der eine Freisetzung der inerten Verbindung erfolgt. Um eine möglichst homogene Formmasse zu erhalten, ist eine intensive Durchmischung notwendig. Die Reihenfolge des Mischens der Komponenten kann variiert werden, es können zwei oder gegebenenfalls mehrere Komponenten vorgemischt sein oder es können auch alle Komponenten gemeinsam gemischt werden.

Aus den erfindungsgemäßen Formmassen lassen sich z.B. durch Spritzguß oder Extrusion Formkörper herstellen, die flammwidrig sind und bei der Brandprüfung nach UL 94 nicht zum brennenden Abtropfen neigen.

Die erfindungsgemäßen Formmassen eignen sich sehr gut zur Herstellung von Formteilen aller Art, z.B. durch Spritzguß oder Extrusion. Sie können weiterhin zur Herstellung von Folien und Halbzeug im Tiefzieh- oder Blasverfahren verwendet werden.

### BEISPIELE

Unter Verwendung der unten aufgeführten Komponenten A) bis F) werden die erfindungsgemäßen Formmassen 1, 2 und 3 sowie zu Vergleichszwecken die Formmassen V1 und V2 hergestellt und getestet.

### Komponente A)

Poly-2,6-dimethyl-1,4-phenylenether mit einem mittleren Molekulargewicht (M_{w}) von 40000 g/mol.

### Komponente B₁)

Schlagfestes Polystyrol mit 9 Gew.-% Polybutadien und Zellteilchenmorphologie, mittlere Teilchengröße der Weichkomponente von 1,9 µm. Die VZ der Hartmatrix betrug 80 ml/g (0,5 %-ig in Toluol bei 23°C).

### Komponente B₂)

Schlagfestes Polystyrol mit 11 Gew.-% Polybutadien und Zellteilchenmorphologie, mittlere Teilchengröße der Weichkomponente von 3,5 µm. Die VZ der Hartmatrix betrug 80 ml/g (0,5 %-ig in Toluol bei 23°C).

### Komponente C)

Resorcinoldiphosphat, z.B. Fyroflex RDP (Akzo).

### Komponente D)

Expandierbarer Graphit, z.B. Sigraflex FR 90-60/80.

### Komponente E)

SEBS Blockkautschuk Kraton G 1650 (Shell AG).

### Komponente F)

Ruß Black Pearls 880 (als 15 %-iger Batch in Polystyrol, VZ=80 ml/g 0,5 %-ig in Toluol bei 23°C).

### Herstellung der thermoplastischen Formmassen

Die Komponenten A) und F) wurden auf einem Zweiwellenextruder (ZKS 30 der Fa. Werner & Pfleiderer) bei 240°C gemischt, als Strang ausgetragen, gekühlt und granuliert.

Das getrocknete Granulat wurde bei 240 bis 260°C zu Rundscheiben, Flachstäben für die UL 94-Prüfung, und Normkleinstäben verarbeitet.

Die Schädigungsarbeit Wₛ wurde nach DIN 53 443 bei 23°C bestimmt. Die Wärmeformbeständigkeit der Proben wurde mittels der Vicat-Erweichungstemperatur, bestimmt nach DIN 53 460, mit einer Kraft von 49,05 N und einer Temperatursteigerung von 50 K je Stunde, an Normkleinstäben ermittelt.

Die Flammwidrigkeit und das Abtropfverhalten wurde nach UL 94 an Stäben von 1/16"-Dicke bestimmt, die angeführten Brandzeiten stellen die Summe der Brandzeiten aus beiden Beflammungen dar.

Die Zusammensetzungen und Eigenschaften der thermoplastischen Formmassen sind in der Tabelle 1 zusammengestellt.

**Tabelle 1:**

| Formmasse Nr. | V1 | 1 | 2 | V2 | 3 |
|---|---|---|---|---|---|
| Komponente [Gew.-%] | | | | | |
| A | 40 | 39,1 | 38,3 | 32 | 30,5 |
| B₁ | 47 | 46,0 | 44,9 | 44,2 | 42,0 |
| B₂ | - | - | - | 2,5 | 2,4 |
| C | 10 | 10 | 12 | 14 | 14 |
| D | - | 2 | 2 | - | 4 |
| E | 3 | 2,9 | 2,8 | 4 | 3,8 |
| F | - | - | - | 3,3 | 3,3 |
| Wₛ [Nm] | 34 | 28 | 29 | 24 | 23 |
| Vicat B [°C] | 111 | 110 | 108 | 94 | 91 |
| UL 94 Brandzeit [s] | V-2 74 | V-1 76 | V-O 42 | V-2 154 | V-1 89 |
| Stäbe abgetropft | 5 | 0 | 0 | 5 | 0 |

Die Versuche belegen die überraschend hohe Wirksamkeit der Komponente D) als Antitropfmittel.58/hz

## Patentansprüche

1. Flammwidrige, thermoplastische Formmasse, enthaltend
A) mindestens einen Polyphenylenether,
B) mindestens ein vinylaromatisches Polymer und
C) mindestens ein Flammschutzmittel,
dadurch gekennzeichnet, daß sie außerdem
D) eine die Tropffestigkeit der Formmasse erhöhende Menge an expandierbarem Graphit umfaßt;
und daß
das Flammschutzmittel C) ausgewählt ist unter phosphororganischen Verbindungen der allgemeinen Formeln (IV), (V) und (VI) 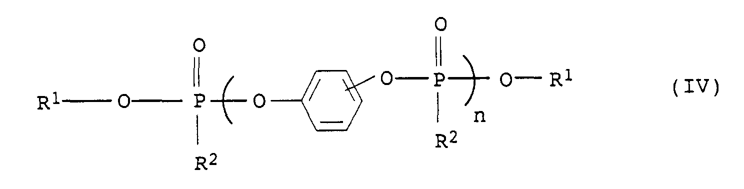 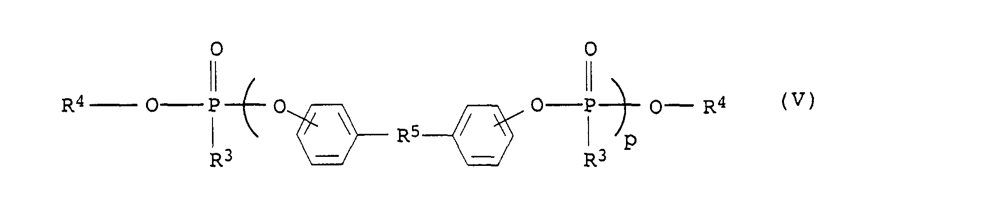 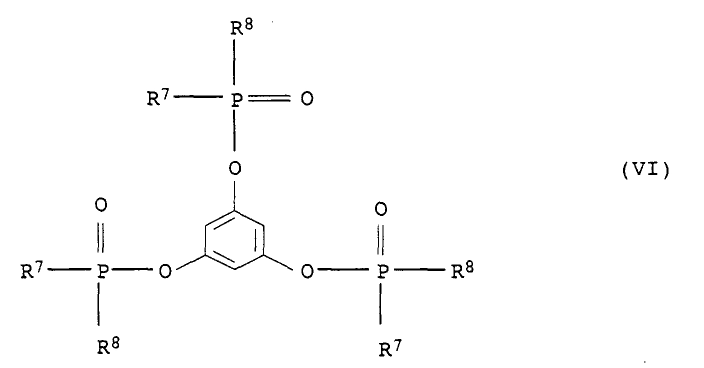 worin
R¹ und R⁴ unabhängig voneinander für gegebenenfalls substituiertes Alkyl oder Aryl stehen;
R², R³, R⁷ und R⁸ unabhängig voneinander für gegebenenfalls substituiertes Alkyl, Aryl, Alkoxy oder Aryloxy stehen,
R⁵ für Alkylen, -SO₂-, -CO-, -N=N- oder -(R⁶)P(O)- steht, worin R⁶ für gegebenenfalls substituiertes Alkyl, Aryl oder Alkylaryl steht, und
n und p unabhängig voneinander einen Wert von 1 bis 30 einnehmen.

2. Formmasse nach Anspruch 1, worin der expandierbare Graphit in einem Anteil von etwa 0,5 bis etwa 10 Gew.-% enthalten ist.

3. Formmasse nach Anspruch 2, enthaltend, jeweils bezogen auf das Gesamtgewicht der Formmasse
A) etwa 5 bis etwa 97,5 Gew.-% Polyphenylenether,
B) etwa 1 bis etwa 93,5 Gew.-% Styrolpolymerisat,
C) etwa 1 bis etwa 20 Gew.-% Flammschutzmittel
D) etwa 0,5 bis etwa 10 Gew.-% expandierbaren Graphit,
E) etwa 0 bis etwa 50 Gew.-% Schlagzähmodifier,
sowie
F) etwa 0 bis etwa 60 Gew.-% üblicher Zusätze.

4. Thermoplastische Formmasse nach einem der Ansprüche 1 bis 3,
dadurch gekennzeichnet, daß Komponente D) eine Einlagerungsverbindung aus Graphit und einer inerten Verbindung ist, deren Freisetzung oberhalb von etwa 240°C etwa bei Normaldruck erfolgt.

5. Thermoplastische Formmasse nach Anspruch 4, wobei der Anteil der inerten Verbindung mindestens 10 Gew.-%, bezogen auf Komponente D) beträgt.

6. Thermoplastische Formmasse nach Anspruch 5, wobei die inerte Verbindung ausgewählt ist unter H₂O, CO₂, SO₃ und N₂.

7. Thermoplastische Formmasse nach einem der Ansprüche 1 bis 6,
dadurch gekennzeichnet, daß als Flammschutzmittel Resorcinol- und/oder Hydrochinondiphenylphosphat eingesetzt wird.

8. Verwendung einer Formmasse nach einem der Ansprüche 1 bis 7 zur Herstellung von flammwidrigen Formkörpern, Fasern und Filmen.

9. Flammwidrige Formkörper, Fasern oder Filme, hergestellt unter Verwendung einer Formmasse nach einem der Ansprüche 1 bis 7.

## Patentansprüche (Patentansprüche für folgende(n) Vertragsstaat(en): BE, DK, ES and SE)

1. Flammwidrige, thermoplastische Formmasse, enthaltend
A) mindestens einen Polyphenylenether,
B) mindestens ein vinylaromatisches Polymer und
C) mindestens ein von rotem Phosphor verschiedenes Flammschutzmittel,
dadurch gekennzeichnet, daß sie außerdem
D) eine die Tropffestigkeit der Formmasse erhöhende Menge an expandierbarem Graphit umfaßt.

2. Formmasse nach Anspruch 1, worin der expandierbare Graphit in einem Anteil von etwa 0,5 bis etwa 10 Gew.-% enthalten ist.

3. Formmasse nach Anspruch 2, enthaltend, jeweils bezogen auf das Gesamtgewicht der Formmasse
A) etwa 5 bis etwa 97,5 Gew.-% Polyphenylenether,
B) etwa 1 bis etwa 93,5 Gew.-% Styrolpolymerisat,
C) etwa 1 bis etwa 20 Gew.-% Flammschutzmittel
D) etwa 0,5 bis etwa 10 Gew.-% expandierbaren Graphit,
E) etwa 0 bis etwa 50 Gew.-% Schlagzähmodifier,
sowie
F) etwa 0 bis etwa 60 Gew.-% üblicher Zusätze.

4. Thermoplastische Formmasse nach einem der Ansprüche 1 bis 3, dadurch gekennzeichnet, daß Komponente D) eine Einlagerungsverbindung aus Graphit und einer inerten Verbindung ist, deren Freisetzung oberhalb von etwa 240°C etwa bei Normaldruck erfolgt.

5. Thermoplastische Formmasse nach Anspruch 4, wobei der Anteil der inerten Verbindung mindestens 10 Gew.-%, bezogen auf Komponente D) beträgt.

6. Thermoplastische Formmasse nach Anspruch 5, wobei die inerte Verbindung ausgewählt ist unter H₂O, CO₂, SO₃ und N₂.

7. Thermoplastische Formmasse nach einem der Ansprüche 1 bis 6, dadurch gekennzeichnet, daß als Flammschutzmittel Resorcinol- und/oder Hydrochinondiphenylphosphat eingesetzt wird.

8. Verwendung einer Formmasse nach einem der Ansprüche 1 bis 7 zur Herstellung von flammwidrigen Formkörpern, Fasern und Filmen.

9. Flammwidrige Formkörper, Fasern oder Filme, hergestellt unter Verwendung einer Formmasse nach einem der Ansprüche 1 bis 7.

## Claims

1. A flame-retardant, thermoplastic molding material containing
A) at least one polyphenylene ether,
B) at least one vinylaromatic polymer and
C) at least one flameproofing agent which is different from red phosphorus,
wherein said molding material furthermore comprises
D) an amount of expandable graphite which increases the resistance of the molding material to dripping.

2. A molding material as claimed in claim 1, wherein the expandable graphite is present in an amount of from about 0.5 to about 10% by weight.

3. A molding material as claimed in claim 2, containing, based in each case on the total weight of the molding material,
A) from about 5 to about 97.5% by weight of polyphenylene ether,
B) from about 1 to about 93.5% by weight of styrene polymer,
C) from about 1 to about 20% by weight of flameproofing agent,
D) from about 0.5 to about 10% by weight of expandable graphite,
E) from about 0 to about 50% by weight of impact modifier and
F) from about 0 to about 60% by weight of conventional additives.

4. A thermoplastic molding material as claimed in any of claims 1 to 3, wherein component D) is an intercalation compound comprising graphite and an inert compound, the liberation of which takes place at above about 240°C at about atmospheric pressure.

5. A thermoplastic molding material as claimed in claim 4, the amount of the inert compound being at least 10% by weight, based on component D).

6. A thermoplastic molding material as claimed in claim 5, the inert compound being selected from H₂O, CO₂, SO₃ and N₂.

7. A thermoplastic molding material as claimed in any of claims 1 to 6, wherein the flameproofing agent used is resorcinol diphenyl phosphate or hydroquinone diphenyl phosphate.

8. The use of a molding material as claimed in any of claims 1 to 7 for the production of flame-retardant moldings, fibers and films.

9. A flame-retardant molding, fiber or film produced using a molding material as claimed in any of claims 1 to 7.

## Claims (Claims for the following Contracting State(s): DE, FR, GB, IT and NL)

1. A flame-retardant, thermoplastic molding material containing
A) at least one polyphenylene ether,
B) at least one vinylaromatic polymer and
C) at least one flameproofing agent,
wherein said molding material furthermore comprises
D) an amount of expandable graphite which increases the resistance of the molding material to dripping;
and wherein the flameproofing agent c) is selected from organophosphorus compounds of the formulae (IV), (V) and (VI) 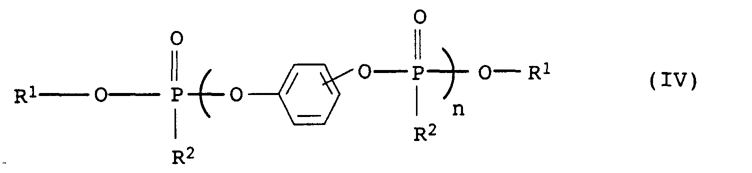 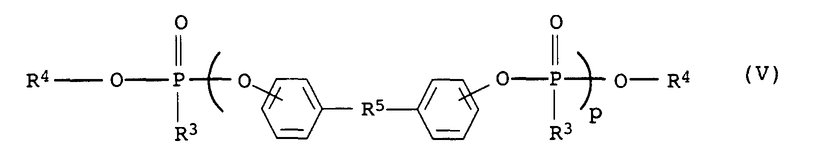 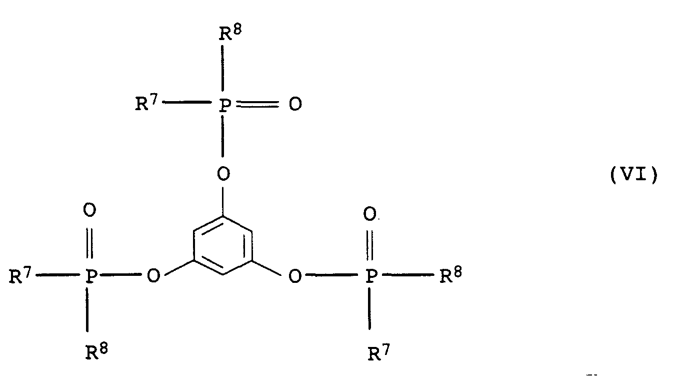 where
R¹ and R⁴, independently of one another, are each unsubstituted or substituted alkyl or aryl;
R², R³, R⁷ and R⁸, independently of one another, are each unsubstituted or substituted alkyl, aryl, alkoxy or aryloxy,
R⁵ is alkylene, -SO₂-, -CO-, -N=N- or -(R⁶)P(O)-, where R⁶ is unsubstituted or substituted alkyl, aryl or alkylaryl, and
n and p, independently of one another, are each from 1 to 30.

2. A molding material as claimed in claim 1, wherein the expandable graphite is present in an amount of from about 0.5 to about 10% by weight.

3. A molding material as claimed in claim 2, containing, based in each case on the total weight of the molding material,
A) from about 5 to about 97.5% by weight of polyphenylene ether,
B) from about 1 to about 93.5% by weight of styrene polymer,
C) from about 1 to about 20% by weight of flameproofing agent,
D) from about 0.5 to about 10% by weight of expandable graphite,
E) from about 0 to about 50% by weight of impact modifier and
F) from about 0 to about 60% by weight of conventional additives.

4. A thermoplastic molding material as claimed in any of claims 1 to 3, wherein component D) is an intercalation compound comprising graphite and an inert compound, the liberation of which takes place at above about 240°C at about atmospheric pressure.

5. A thermoplastic molding material as claimed in claim 4, the amount of the inert compound being at least 10% by weight, based on component D).

6. A thermoplastic molding material as claimed in claim 5, the inert compound being selected from H₂O, CO₂, SO₃ and N₂.

7. A thermoplastic molding material as claimed in any of claims 1 to 6, wherein the flameproofing agent used is resorcinol diphenyl phosphate or hydroquinone diphenyl phosphate.

8. The use of a molding material as claimed in any of claims 1 to 7 for the production of flame-retardant moldings, fibers and films.

9. A flame-retardant molding, fiber or film produced using a molding material as claimed in any of claims 1 to 7.

## Revendications

1. Masse de moulage thermoplastique, ignifuge, contenant
A) au moins un éther de polyphénylène,
B) au moins un polymère vinyl-aromatique, et
C) au moins un agent ignifuge différent du phosphore rouge,
caractérisée en ce qu'elle comporte, en outre,
D) une quantité de graphite expansible qui augmente les propriétés anti-goutte de la masse de moulage.

2. Masse de moulage suivant la revendication 1, dans laquelle le graphite expansible est contenu en une fraction d'environ 0,5 à environ 10% en poids.

3. Masse de moulage suivant la revendication 2, contenant, chaque fois par rapport au poids total de la masse de moulage,
A) environ 5 à environ 97,5% en poids d'éther de polyphénylène,
B) environ 1 à environ 93,5% en poids de polymère de styrène,
C) environ 1 à environ 20% en poids d'agent ignifuge,
D) environ 0,5 à environ 10% en poids de graphite expansible,
E) environ 0 à environ 50% en poids de modificateur de la résistance aux chocs, ainsi que
F) environ 0 à environ 60% en poids d'additifs courants.

4. Masse de moulage thermoplastique suivant l'une des revendications 1 à 3, caractérisée en ce que le composant D) est un composé d'insertion à base de graphite et d'un composé inerte dont la libération a lieu au-dessus d'environ 240°C à environ une pression normale.

5. Masse de moulage thermoplastique suivant la revendication 4, dans laquelle la fraction du composé inerte est d'au moins 10% en poids, par rapport au composant D).

6. Masse de moulage thermoplastique suivant la revendication 5, dans laquelle le composé inerte est choisi parmi H₂O, CO₂, SO₃ et N₂.

7. Masse de moulage thermoplastique suivant l'une des revendications 1 à 6, caractérisée en ce que, comme agent ignifuge, on met en oeuvre du diphénylphosphate de résorcinol et/ou d'hydroquinone.

8. Utilisation d'une masse de moulage suivant l'une des revendications 1 à 7, pour la fabrication de corps façonnés, fibres et films ignifuges.

9. Corps façonnés, fibres ou fils ignifuges, préparés par l'utilisation d'une masse de moulage suivant l'une des revendications 1 à 7.

## Revendications (Revendications pour l'(les) Etat(s) contractant(s) suivant(s): DE, FR, GB, IT et NL)

1. Masse de moulage thermoplastique, ignifuge, contenant
A) au moins un éther de polyphénylène,
B) au moins un polymère vinyl-aromatique, et
C) au moins un agent ignifuge,
caractérisée en ce qu'elle comporte, en outre,
D) une quantité de graphite expansible qui augmente les propriétés anti-goutte de la masse de moulage,
et en ce que l'agent ignifuge C) est choisi parmi des composés organophosphoriques des formules générales (IV), (V) et (VI) : 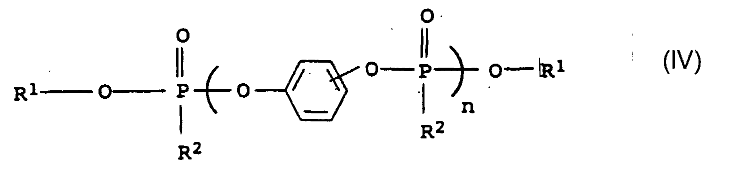 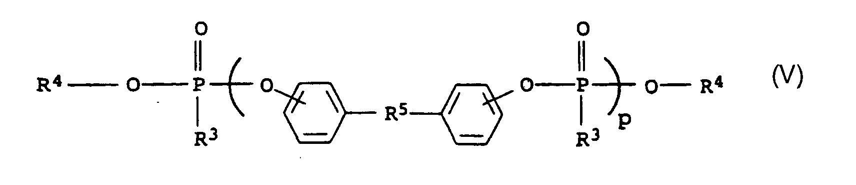 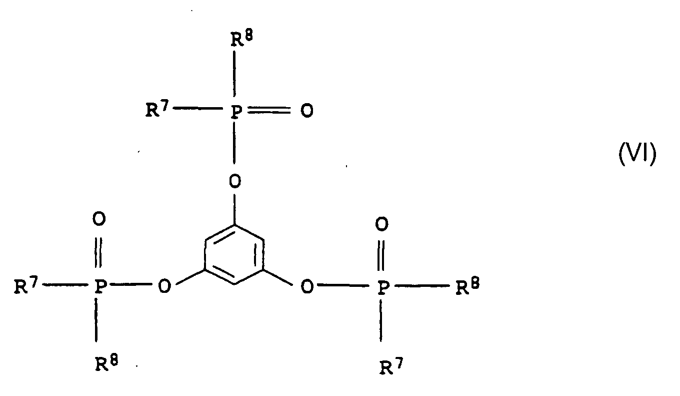 dans lesquelles
R¹ et R⁴ représentent indépendamment l'un de l'autre un alkyle ou aryle éventuellement substitué,
R², R³, R⁷ et R⁸ représentent indépendamment l'un de l'autre un groupe alkyle, aryle, alcoxy ou aryloxy, éventuellement substitué,
R⁵ représente un groupe alkylène -SO₂-, -CO-, -N=N- ou -(R⁶)P(O)-, où R⁶ représente un groupe alkyle, aryle ou alkylaryle éventuellement substitué, et
n et p ont indépendamment l'un de l'autre une valeur de 1 à 30.

2. Masse de moulage suivant la revendication 1, dans laquelle le graphite expansible est contenu en une fraction d'environ 0,5 à environ 10% en poids.

3. Masse de moulage suivant la revendication 2, contenant, chaque fois par rapport au poids total de la masse de moulage,
A) environ 5 à environ 97,5% en poids d'éther de polyphénylène,
B) environ 1 à environ 93,5% en poids de polymère de styrène,
C) environ 1 à environ 20% en poids d'agent ignifuge,
D) environ 0,5 à environ 10% en poids de graphite expansible,
E) environ 0 à environ 50% en poids de modificateur de la résistance aux chocs, ainsi que
F) environ 0 à environ 60% en poids d'additifs courants.

4. Masse de moulage thermoplastique suivant l'une des revendications 1 à 3, caractérisée en ce que le composant D) est un composé d'insertion à base de graphite et d'un composé inerte dont la libération a lieu au-dessus d'environ 240°C à environ une pression normale.

5. Masse de moulage thermoplastique suivant la revendication 4, dans laquelle la fraction du composé inerte est d'au moins 10% en poids, par rapport au composant D).

6. Masse de moulage thermoplastique suivant la revendication 5, dans laquelle le composé inerte est choisi parmi H₂O, CO₂, SO₃ et N₂.

7. Masse de moulage thermoplastique suivant l'une des revendications 1 à 6, caractérisée en ce que, comme agent ignifuge, on met en oeuvre du diphénylphosphate de résorcinol et/ou d'hydroquinone.

8. Utilisation d'une masse de moulage suivant l'une des revendications 1 à 7, pour la fabrication de corps façonnés, fibres et films ignifuges.

9. Corps façonnés, fibres ou fils ignifuges, préparés par l'utilisation d'une masse de moulage suivant l'une des revendications 1 à 7.
